# EUROPÄISCHE PATENTSCHRIFT

(11) **EP 3 145 851 B1**
(45) Veröffentlichungstag und Bekanntmachung des Hinweises auf die Patenterteilung: **04.07.2018**
(21) Anmeldenummer: 15724616.6
(22) Anmeldetag: 21.05.2015
(51) Int. Cl.: B66C 6/00, B66C 17/00, F16B 7/18

(54) **KRANTRÄGER FÜR EINEN KRAN, INSBESONDERE FÜR EINEN BRÜCKEN- ODER PORTALKRAN, UND EINEN KRAN MIT SOLCH EINEM TRÄGER.**
CRANE GIRDER FOR A CRANE, IN PARTICULAR FOR A BRIDGE CRANE OR A GANTRY CRANE, AND CRANE WITH SUCH A GIRDER.
POUTRE DE GRUE POUR UNE GRUE, EN PARTICULIER POUR UN PONT ROULANT OU UNE GRUE À PORTIQUE, ET GRUE AVEC UNE TELLE POUTRE.

(30) Priorität: 23.05.2014 DE 102014107323
(43) Veröffentlichungstag der Anmeldung: 29.03.2017
(73) Patentinhaber: Konecranes Global Corporation, 05830 Hyvinkää (FI)
(72) Erfinder: PASSMANN, Christoph, 44287 Dortmund (DE); KREISNER, Richard, 58256 Ennepetal (DE); SCHLIERBACH-KNOBLOCH, Thomas, 58313 Herdecke (DE); NOLL, Stefan, 51399 Burscheid (DE); SCHULTE, Franz, 58313 Herdecke (DE)
(74) Vertreter: Moser Götze & Partner Patentanwälte mbB
(86) Internationale Anmeldenummer: PCT/EP2015/061291
(87) Internationale Veröffentlichungsnummer: WO 2015/177292

(56) Entgegenhaltungen:
- DE-A1- 1 907 455
- DE-A1-102012 102 808
- DE-C- 843 424
- DE-U- 1 919 256
- US-A- 499 622
- US-A- 2 500 718
- US-A- 3 294 252

## Beschreibung

Die Erfindung betrifft einen Kranträger für einen Kran, insbesondere für einen Brücken- oder Portalkran, der als Fachwerkträger mit einem Obergurt, einem Untergurt und diese miteinander verbindenden Streben ausgebildet ist, wobei mindestens eine der Streben flächenförmig ausgebildet ist und eine sich quer zu einer Längsrichtung des Kranträgers erstreckende Hauptfläche aufweist.

Außerdem betrifft die Erfindung einen Kran, insbesondere Brückenkran oder Portalkran, mit mindestens einem derartigen Kranträger.

Aus der deutschen Offenlegungsschrift DE 10 2012 102 808 A1 ist ein Brückenkran mit einem als Fachwerkträger ausgebildeten Kranträger bekannt. Der Kranträger umfasst einen Obergurt und einen Untergurt, die über flächenförmig ausgebildete Streben miteinander verbunden sind. Die Streben weisen jeweils eine sich quer zu einer Längsrichtung des Kranträgers erstreckende Hauptfläche auf und sind mit ihren einander gegenüberliegenden Enden an dem Obergurt und dem Untergurt angeschweißt.

Die deutsche Gebrauchsmusterschrift DE 1 919 256 U offenbart einen als Fachwerkträger ausgebildeten Kranträger, dessen Streben stabförmig ausgebildet und mit dem Untergurt verschraubt sind. Ein derartiger Kranträger ist auch in der US 2011/0180507 A1 offenbart.

Aus der deutschen Offenlegungsschrift DE 1 907 455 A ist ein Fachwerkträger mit flächenförmig ausgebildeten Streben bekannt, die mit dem Untergurt beziehungsweise dem Obergurt verschraubt sind. Der Fachwerkträger ist kein Kranträger.

Des Weiteren ist aus der deutschen Patentschrift DE 843 424 B ein als Fachwerkträger ausgebildetes Tragwerk einer Brücke mit verschraubten stabförmigen Streben bekannt.

Der Erfindung liegt die Aufgabe zugrunde, einen verbesserten Kranträger für einen Kran, insbesondere für einen Brücken- oder Portalkran, bereit zu stellen, der besonders einfach herzustellen ist. Außerdem liegt der Erfindung die Aufgabe zugrunde, einen Kran mit einem verbesserten Kranträger bereit zu stellen.

Diese Aufgabe wird durch einen Kranträger für einen Kran, insbesondere für einen Brücken- oder Portalkran, mit den Merkmalen des Anspruchs 1 sowie durch einen Kran mit den Merkmalen des Anspruchs 15 gelöst. In den Unteransprüchen 2 bis 14 sind vorteilhafte Ausgestaltungen der Erfindung angegeben.

Erfindungsgemäß wird ein Kranträger für einen Kran, insbesondere für einen Brücken- oder Portalkran, der als Fachwerkträger mit einem Obergurt, einem Untergurt und diese miteinander verbindenden Streben ausgebildet ist, wobei mindestens eine der Streben flächenförmig ausgebildet ist und eine sich quer zu einer Längsrichtung des Kranträgers erstreckende Hauptfläche aufweist, in vorteilhafter Weise dadurch verbessert, dass die Strebe an dem Obergurt und/oder dem Untergurt lösbar befestigt ist. Hierdurch lassen sich einzelne Module und Baugruppen des Kranträgers vorfertigen und vor der Montage platzsparend und somit auf einfache sowie kostengünstige Weise zum Einsatzort transportieren. Gegenüber Kranträgern mit herkömmlichen, nicht-lösbaren Verbindungen wird somit eine besonders einfache Montage des Kranträgers am Einsatzort möglich und eine vergleichsweise teure Fabrikfertigung und ein aufwendiger Transport können vermieden werden. Auch können aufwendig herzustellende Schweißverbindungen vermieden werden.

Als Streben werden hierbei allgemein diejenigen Elemente einer Fachwerkkonstruktion angesehen, die einen schrägen beziehungsweise diagonalen Verlauf aufweisen. Dadurch unterscheiden sich die Streben einer Fachwerkkonstruktion von den Elementen, die ausschließlich vertikal verlaufen und als Pfosten bezeichnet werden.

Durch eine entsprechende flächenförmige Ausgestaltung nehmen die Streben beziehungsweise Flächenstreben bevorzugt Kräfte in Richtung ihrer Längsachse und somit in der Erstreckungsebene ihrer ebenen Hauptfläche auf. Derartige Flächenelemente beziehungsweise Flächentragwerke werden in der technischen Mechanik als Scheiben bezeichnet, wohingegen senkrecht zu ihrer Erstreckungsebene beziehungsweise Hauptfläche belastete Flächenelemente als Platten bezeichnet werden. Scheiben und somit auch die erfindungsgemäßen Flächenstreben unterscheiden sich beispielsweise von Stäben beziehungsweise stabförmigen Pfosten und Streben dadurch, dass ihre Dickenabmessungen wesentlich kleiner sind als die die flächige Ausdehnung der Scheibe bestimmenden Längen- und Breitenabmessungen. Demnach können flächenförmige Streben auch als Flächenstreben oder Scheibenstreben bezeichnet werden.

Außerdem weisen die mit flächenförmigen Streben als Fachwerkträger hergestellten Kranträger bedingt durch das Weglassen statisch nicht erforderlicher Blechbereiche und eine damit einhergehende Materialersparnis, ein deutlich verringertes Eigengewicht und zugleich eine optimierte Tragfähigkeit auf.

In vorteilhafter Weise ist vorgesehen, dass die Strebe über die Hauptfläche an dem Obergurt und/oder dem Untergurt befestigt ist. Durch das Einbeziehen der Hauptfläche in die Befestigung der Strebe lassen sich im Hinblick auf die außerhalb der Stege des Obergurts beziehungsweise Untergurts ausgebildeten Membrangelenke der Kraftfluss und die Beulsteifigkeit der Strebe optimieren.

Hierbei ist in konstruktiv einfacher Weise vorgesehen, dass die Strebe an einem Steg des Obergurts und/oder des Untergurts befestigt ist und der Steg sich vorzugsweise vertikal in Bezug auf die Längsrichtung des Kranträgers erstreckt.

In vorteilhafter Weise ist vorgesehen, dass die Strebe formschlüssig und/oder kraftschlüssig befestigt ist. Hierdurch kann der Kranträger besonders einfach montiert sowie demontiert werden.

In konstruktiv einfacher Weise ist vorgesehen, dass die Strebe mittels einer Schraubverbindung befestigt ist.

In einer einfachen Ausgestaltung des Kranträgers ist vorgesehen, dass die Schraubverbindung zumindest teilweise innerhalb einer von der Hauptfläche gebildeten Ebene angeordnet ist und vorzugsweise eine zur Hauptfläche parallele Einschraubrichtung aufweist.

Des Weiteren ist in vorteilhafter Weise vorgesehen, dass die Schraubverbindung mindestens eine Schraube, eine an der Hauptfläche befestigte Hülse sowie eine Mutter umfasst und mittels der Schraube, die durch einen Schraubendurchgang des Obergurts oder des Untergurts sowie die Hülse geführt ist, und der Mutter, die sich an der Hülse abstützt und vorzugsweise als Setzmutter ausgebildet ist, die Strebe an dem Obergurt oder dem Untergurtbefestigt ist. Auf diese Weise kann eine einfach herzustellende und verdrehsichere lösbare Befestigung der Strebe an dem Obergurt beziehungsweise Untergurt erreicht werden.

In vorteilhafter Weise ist vorgesehen, dass die Schraubverbindung zusätzlich einen Spannstift umfasst, durch den die Schraube hindurch geführt ist und an dem sich der Obergurt oder der Untergurt abstützt. Durch den Spannstift wird die Schraubverbindung, insbesondere deren Schraube, hinsichtlich auftretender Quer- und Scherkräfte entlastet.

In konstruktiv einfacher Weise ist vorgesehen, dass die Hauptfläche mindestens eine Aussparung aufweist, an deren Rand die Hülse mit ihrer Mantelfläche anliegt und befestigt, vorzugsweise angeschweißt, angelötet oder angeklebt, ist. Die Aussparung erleichtert das Positionieren der Hülse an der Strebe bevor die Hülse und die Strebe vorzugsweise durch Herstellen der Schweiß, Löt- oder Klebverbindung aneinander befestigt werden. Außerdem kann der Fertigungsaufwand verringert werden, da die Aussparungen bei aus Stahlblech hergestellten Streben besonders einfach beispielsweise durch Laserschneiden hergestellt werden können.

In besonders vorteilhafter Weise ist zudem vorgesehen, dass die Strebe mittels einer Steckverbindung befestigt ist. Hierdurch wird eine wesentliche Montageerleichterung erreicht, da die Streben relativ zu dem Untergurt beziehungsweise Obergurt in formschlüssiger Weise in einer gewünschten Befestigungsposition positionierbar ist. Nachdem die als Positionierhilfe dienende Steckverbindung hergestellt ist, kann in einfacher Weise eine lösbare Arretierung der Befestigungsposition, beispielsweise mittels der zuvor genannten Schraubverbindung, erfolgen.

In vorteilhafter Weise ist ferner vorgesehen, dass die Steckverbindung eine zur Hauptfläche parallele Steckrichtung aufweist.

In besonders vorteilhafter Weise ist vorgesehen, dass die Steckverbindung unmittelbar zwischen der Hauptfläche und dem Obergurt oder dem Untergurt hergestellt ist, insbesondere durch mindestens einen Steckabsatz der Hauptfläche, der in eine Steckaufnahme des Obergurts oder in eine Steckaufnahme des Untergurts gesteckt ist. Das Ausrichten der Streben gegenüber dem Untergurt beziehungsweise Obergurt erfolgt hierbei in besonders einfacher Weise durch Einschieben beziehungsweise Einstecken der Steckabsätze der Streben in die entsprechenden Steckaufnahmen des Untergurtes oder Obergurtes, wodurch diese ineinandergreifen und aneinander zur Anlage gebracht werden. Die relative Position des Untergurtes oder Obergurtes zu den Streben ist hierdurch in einfacher Weise in rotatorischer sowie in translatorischer Hinsicht festlegbar.

In vorteilhafter Weise ist außerdem vorgesehen, dass der Obergurt und der Untergurt zusätzlich über mehrere entlang der Längsrichtung des Kranträgers angeordnete Pfosten miteinander verbunden sind. Hierdurch wird die Gefahr eines Ausbeulens des Obergurtes oder des Untergurtes besonders wirksam verringert. Auch wird hierdurch die Tragfähigkeit des Kranträgers erhöht.

In konstruktiv einfacher Weise ist vorgesehen, dass der Obergurt und der Untergurt ausschließlich lösbar miteinander verbunden sind.

Erfindungsgemäß wird ein Kran, insbesondere ein Brücken- oder Portalkran, mit mindestens einem sich horizontal in einer Längsrichtung erstreckenden Kranträger, in vorteilhafter Weise dadurch verbessert, dass der Kranträger entsprechend einer der vorstehenden vorteilhaften Ausführungsformen ausgebildet ist.

Ein Ausführungsbeispiel der Erfindung wird anhand der Zeichnungen näher erläutert. Es zeigen:
Figur 1 einen als Ein-Träger-Kran ausgebildeten Brückenkran mit einem erfindungsgemäßen Kranträger,
Figur 2 eine perspektivische Ansicht des Kranträgers gemäß Figur 1,
Figur 3 eine Querschnittsansicht des Kranträgers gemäß Figur 2,
Figur 3a eine Querschnittsansicht des Details A aus Figur 3 und
Figur 4 eine ausschnittsweise Seitenansicht des Kranträgers gemäß Figur 2.

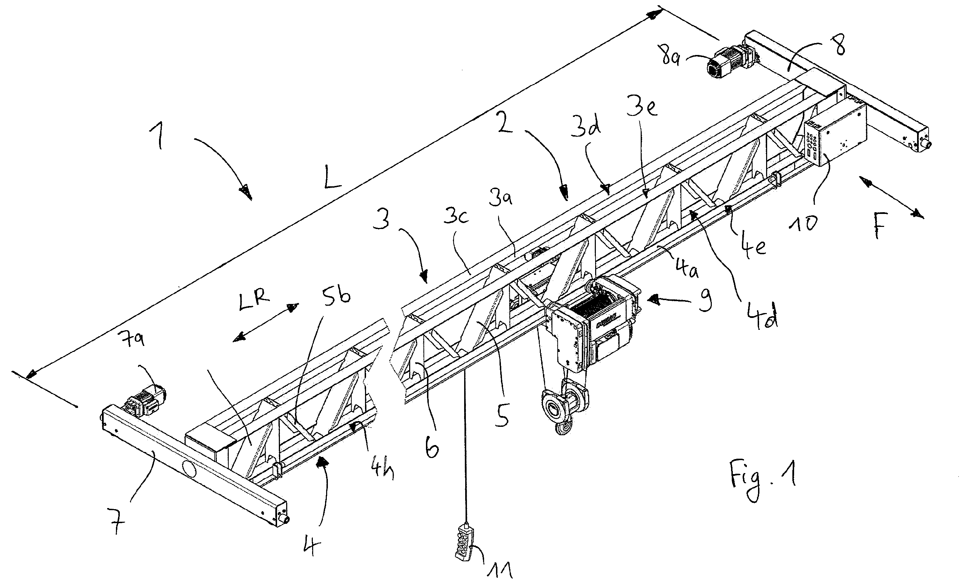

Die Figur 1 zeigt einen als Ein-Träger-Brückenkran ausgebildeten Kran 1. Der Kran 1 umfasst einen als Fachwerkträger ausgebildeten Kranträger 2, der horizontal ausgerichtet ist und sich mit einer Länge L in seiner Längsrichtung LR erstreckt.

Selbstverständlich kann der Kran 1 auch als Ein-Träger-Portalkran mit einem entsprechenden Kranausleger 2 ausgebildet sein. Ebenso kann der Kran 1 als Zwei-Träger-Brückenkran oder als Zwei-Träger-Portalkran ausgebildet sein und entsprechender Weise zwei Kranträger 2 umfassen. Die nachfolgend anhand des als Ein-Träger-Brückenkrans ausgebildeten Krans 1 vorgenommenen Erläuterungen sind dementsprechend übertragbar.

Der Kranträger 2 des Krans 1 bildet mit an seinen sich gegenüber liegenden Enden befestigten ersten und zweiten Fahrwerken 7, 8 eine Kranbrücke aus, die in der Draufsicht im Wesentlichen doppel-T-förmig ausgebildet ist. Über die Fahrwerke 7, 8 ist der Kran 1 in einer horizontalen Fahrtrichtung F quer zur Längsrichtung LR des Kranträgers 2 auf nicht dargestellten Schienen verfahrbar. Die Schienen sind üblicherweise gegenüber einem Boden hochliegend angeordnet und können hierfür beispielsweise über eine geeignete Tragkonstruktion aufgeständert oder an sich gegenüberliegenden Gebäudewänden befestigt sein. Um den Kran 1 beziehungsweise dessen Kranträger 2 zu verfahren, wird das erste Fahrwerk 7 von einem ersten Elektromotor 7a und das zweite Fahrwerk 8 von einem zweiten Elektromotor 8a angetrieben. An dem Kranträger 2 ist eine Krankatze 9 mit einem als Seilzug ausgebildeten Hebezeug aufgehängt, die über nicht dargestellte Fahrwerke quer zur Fahrtrichtung F des Krans 1 und entlang der Längsrichtung LR des Kranträgers 2 verfahrbar ist. Die Krankatze 9 ist entlang und auf seitlich hervor ragenden Laufflächen 4h eines Untergurtes 4 des Kranträgers 2 verfahrbar. Der Kran 1 umfasst zudem eine Kransteuerung 10 und einen hiermit verbundenen Hängesteuerschalter 11, worüber der Kran 1 beziehungsweise die Elektromotoren 7a, 8a sowie die Krankatze 9 mit dem Seilzug getrennt voneinander angesteuert und bedient werden können.

Die Fachwerkkonstruktion des Kranträgers 2 umfasst im Wesentlichen einen Obergurt 3, einen Untergurt 4 und dazwischen diagonal verlaufende Streben 5, über die der Obergurt 3 mit dem Untergurt 4 fest verbunden ist. Wie in Figur 1 dargestellt, können zwischen dem Obergurt 3 und dem Untergurt 4 zusätzlich mehrere, entlang der Längsrichtung LR des Kranträgers 2 angeordnete und vertikal verlaufende Pfosten 6 vorgesehen sein, die den Obergurt 3 und den Untergurt 4 ebenfalls fest miteinander verbinden.

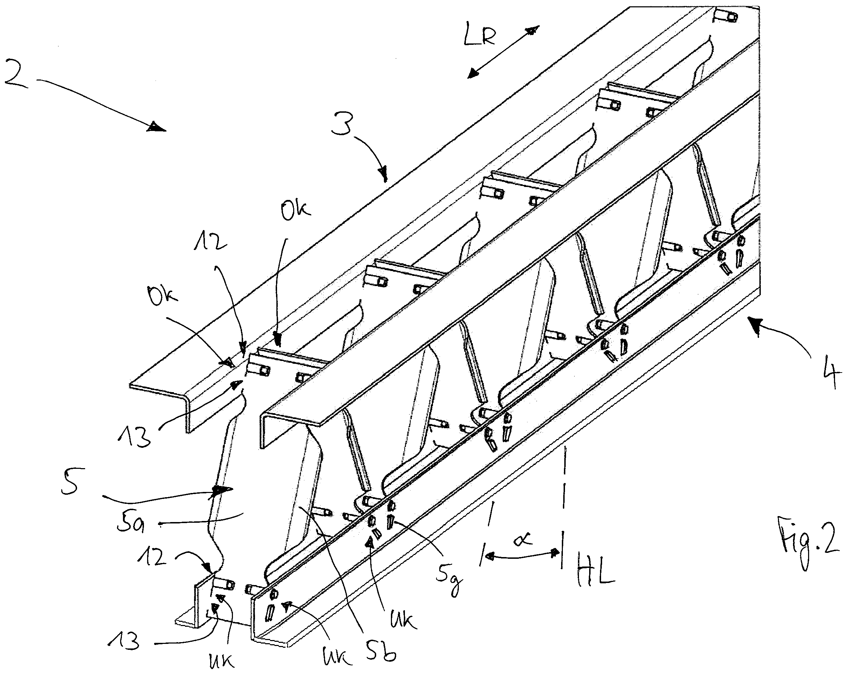

Der Einfachheit halber wird die vorliegende Erfindung im Wesentlichen anhand der Befestigung der Streben 5 an dem Obergurt 3 beziehungsweise dem Untergurt 4 erläutert. Daher ist der Kranträger 2 in den Figuren 2 bis 4 ohne Pfosten 6 und nur mit Streben 5 dargestellt. Die Erfindung ist jedoch nicht auf die Befestigung von Streben 5 an dem Obergurt 3 beziehungsweise Untergurt 4 beschränkt, sondern betrifft in gleicher Weise die Befestigung eventuell vorgesehener Pfosten 6 an dem Obergurt 3 beziehungsweise Untergurt 4 und ist entsprechend hierauf übertragbar.

Der Obergurt 3 und der Untergurt 4 erstrecken sich voneinander beabstandet und parallel in der Längsrichtung LR des Kranträgers 2 zwischen den Fahrwerken 7, 8. Hierbei sind der Obergurt 3 und der Untergurt 4 vertikal voneinander beabstandet. Der Obergurt 3 setzt sich aus zwei in einer horizontalen Ebene angeordneten und horizontal voneinander beabstandeten ersten und zweiten Obergurtprofilen 3d, 3e zusammen. Die beiden Obergurtprofile 3d, 3e sind von einem L- beziehungsweise Winkel-Profil-Träger gebildet, der jeweils einen vertikalen Steg 3a und einen dazu rechtwinklig angeordneten horizontalen Flansch 3c umfasst. Die Flansche 3c der Obergurtprofile 3d, 3e liegen hierbei vorzugsweise in einer horizontalen Ebene mit einer oberen Stirnseite der Strebe 5. Der Untergurt 4 wird analog zu dem Obergurt 3 aus einem ersten Untergurtprofil 4d und einem zweiten Untergurtprofil 4e zusammengesetzt, die ebenfalls jeweils als L- beziehungsweise Winkel-Profil-Träger ausgebildet sind und dementsprechend einen vertikalen Steg 4a und einen dazu rechtwinklig angeordneten Flansch 4f umfassen. Hierbei bilden die Flansche 4c des Untergurts 4 die Laufflächen 4h für die Krankatze 9 aus. Die nach unten gerichteten Stege 3a der Obergurtprofile 3d, 3e der Obergurte 3 und die nach oben gerichteten Stege 4a der Untergurtprofile 4d, 4e der Untergurte 4 sind einander zugewandt.

Die Untergurtprofile 4d, 4e müssen jedoch nicht wie in Figur 1 als L- beziehungsweise Winkel-Profil-Träger ausgebildet sein. Es ist ebenso denkbar, dass der Untergurt 4 des Kranträgers 2 nicht von zwei separaten Untergurtprofilen 4d, 4e, sondern von einem einzigen Flachprofil 4b mit zwei senkrecht aufstehenden Stegen 4a gebildet wird. Bei einem solchen, einen in etwa U-Profil-förmigen Querschnitt aufweisenden Flachprofil 4b ist dementsprechend lediglich ein gemeinsamer Flansch 4f vorgesehen, der seitlich über die Stege 4a hinaus verlängert ist. Hierbei bilden dann die sich gegenüberliegenden Enden des Flansches 4f die Laufflächen 4h aus. In gleicher Weise kann auch der Obergurt 3 von einem entsprechenden Flachprofil 3b gebildet werden.

Der Obergurt 3 und der Untergurt 4 des in Figur 1 dargestellten Kranträgers 2 sind über mehrere jeweils flächenförmig ausgebildete Streben 5 und Pfosten 6 fest und lösbar miteinander verbunden. Hierbei sind die Streben 5 als Blechprofil mit einer Hauptfläche 5a mit einem im Wesentlichen ebenen und rechteckigen Querschnitt ausgebildet, wobei deren Längsseiten zur Erhöhung der Beulsteifigkeit zumindest in einem mittleren Bereich in Form von Nebenflächen 5b umgekantet sind. Die Streben 5 sind innerhalb der Fachwerkkonstruktion des Kranträgers 2 zwischen den Stegen 3a, 4a des Obergurts 3 beziehungsweise Untergurts 4 angeordnet und hierbei so ausgerichtet, dass sich jeweils ihre Hauptfläche 5a quer zur Längsrichtung LR des Kranträgers 2 erstreckt. Es ist also quer zu der Längsrichtung LR des Kranträgers 2 gesehen zwischen den Stegen 3a des Obergurtes 3 beziehungsweise den Stegen 4a des Untergurtes 4 immer nur eine Strebe 5 - beziehungsweise gegebenenfalls ein Pfosten 6 - vorgesehen.

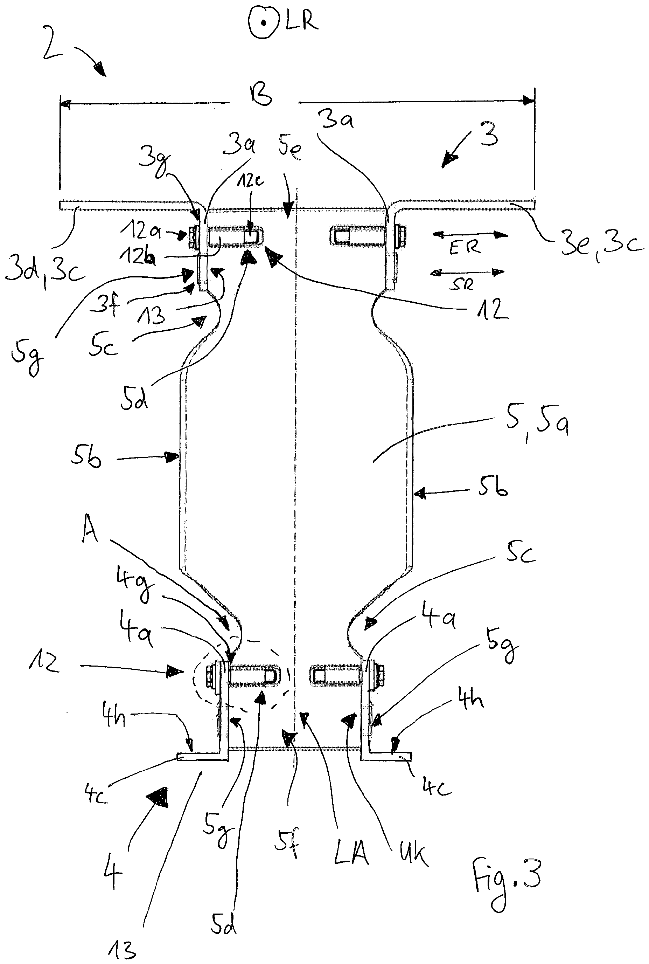

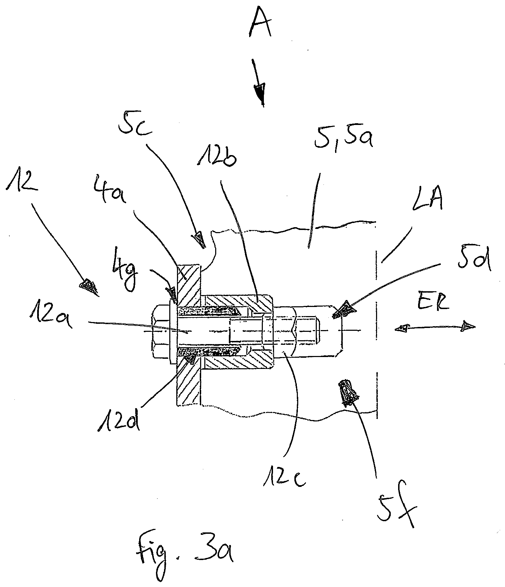

Der Aufbau der Streben 5 wird unten stehend detailliert anhand der Figur 3 beschrieben. Der strukturelle Aufbau der gegebenenfalls vorgesehenen, ebenfalls als Blechprofil ausgebildeten, flächenförmigen Pfosten 6 entspricht - bei entsprechend angepassten Maßen - im Wesentlichen dem Aufbau der flächenförmigen Streben 5, so dass die diesbezügliche Beschreibung einschließlich der hierbei erwähnten Bezugszeichen 5a bis 5g entsprechend übertragbar ist.

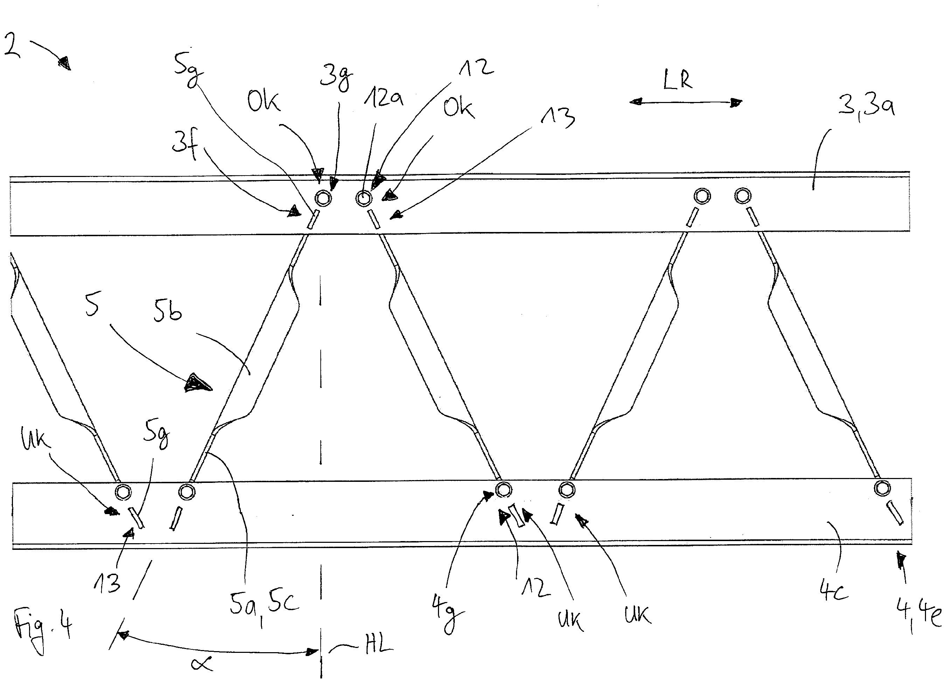

In der Figur 2 ist eine perspektivische Ansicht eines Endes des Kranträgers 2 gezeigt. Der Kranträger 2 ist als Fachwerkträger ausgebildet, dessen Obergurt 3 und Untergurt 4 jeweils aus zwei Obergurtprofilen 3d, 3e beziehungsweise Untergurtprofilen 4d, 4e zusammengesetzt ist. Die Untergurtprofile 4d, 4e sind wie oben beschrieben als Hohlprofile ausgebildet. Die den Obergurt 3 und den Untergurt 4 verbindenden Streben 5 sind in Längsrichtung LR gesehen paarweise und satteldachartig angeordnet. Hierbei ist jede Strebe 5 mit einem Anstellwinkel α gegenüber einer gedachten vertikalen Hilfsebene geneigt (siehe auch Figur 4), die rechtwinklig zu dem sich parallel in der Längsrichtung LR erstreckenden Obergurt 3 und Untergurt 4 verläuft. Der Anstellwinkel α ist hierbei eingeschlossen von der ebenen Hauptfläche 5a der ersten Strebe 5 und der Hilfsebene. Der Einfachheit halber ist der Anstellwinkel α zwischen der Hauptfläche 5a und einer Hilfslinie HL eingezeichnet, die in der Hilfsebene liegt. Vorzugsweise liegt der Anstellwinkel α in einem Bereich von 35° bis 55° und beträgt besonders bevorzugt 45°. Bevorzugt wird eine gerade Anzahl entsprechend paarweise und satteldachartig schräg beziehungsweise diagonal zueinander angeordneter Streben 5 verwendet, so dass über die Länge L gesehen die erste beziehungsweise letzte Strebe 5 am Untergurt 4 beginnt beziehungsweise endet (siehe Figur 1). Um eine gerade Anzahl von Streben 5 mit jeweils gleicher Länge verwenden zu können, wird je nach Länge L des Kranträgers 2 vor der Montage der Anstellwinkel α bestimmt. Hierdurch wird der als Schiene dienende und hierfür die Lauffläche 4h ausbildende Untergurt 4 gegen Durchbiegung verstärkt. Es jedoch grundsätzlich auch denkbar, dass die Streben eine unterschiedliche Länge und dementsprechend auch der Anstellwinkel α unterschiedliche Beträge aufweist.

Bei der paarweisen, satteldachartigen Anordnung der Streben 5 ist im Bereich eines der beiden Enden des Kranträgers 2 in Längsrichtung LR gesehen eine erste Strebe 5 über eine untere Schraubverbindung 12 und eine untere Steckverbindung 13 lösbar an dem Untergurt 4 befestigt. Hiervon ausgehend verläuft die Strebe 5 in Längsrichtung LR in dem Anstellwinkel α geneigt in Richtung des Obergurtes 3, an dem die Strebe 5 über eine obere Schraubverbindung 12 und eine obere Steckverbindung 13 ebenfalls lösbar befestigt ist. Hierbei ist die Strebe 5 mit einem oberen ersten Strebenende 5e und einem unteren zweiten Strebenende 5f zwischen und an einander zugewandten Innenseiten der Stege 3a, 4a des Obergurts 3 beziehungsweise des Untergurts 4 anliegend befestigt.

Durch die Schraubverbindung 12 und die Steckverbindung 13 wird in den an den Stegen 3a, 4a des Obergurts 3 beziehungsweise des Untergurts 4 jeweils ein erster oberer Knotenbereich OK beziehungsweise erster unterer Knotenbereich UK gebildet, der nicht punktförmig sondern linienförmig an den Längsseiten der Hauptfläche 5a der Strebe 5 ausgebildet ist.

Die jeweilige Schraubverbindung 12 und Steckverbindung 13 und deren Herstellung werden unten anhand der Figuren 3, 3a und 4 detailliert beschrieben.

In einem neben dem ersten oberen Knotenbereich OK angeordneten zweiten oberen Knotenbereich OK schließt sich eine zweite Strebe 5 an, die schräg unter dem Anstellwinkel α nach unten zu dem Untergurt 4 verläuft und ein erstes satteldachartig angeordnetes Paar von Streben 5 abschließt. Somit bildet jede Strebe 5 mit der Hilfsebene beziehungsweise Hilfslinie HL im Bereich des entsprechenden oberen Knotenbereichs OK an dem Obergurt 3 einen gleich großen Anstellwinkel a. Dies wiederholt sich so lange, bis von den Streben 5 das gegenüberliegende Ende des Kranträgers 2 erreicht ist. Jeweils zwischen zwei benachbarten Streben 5, insbesondere zwischen den oberen Knotenbereichen OK eines Paares von Streben 5 oder den unteren Knotenbereichen UK zweier benachbarter Paare von Streben 5, kann gegebenenfalls ein Pfosten 6 angeordnet und in gleicher Weise wie die Streben 5 lösbar befestigt werden.

Die Figur 3 zeigt eine Querschnittsansicht des Kranträgers 2 gemäß Figur 2, deren Schnitt quer zur Längsrichtung LR und zwischen zwei benachbarten Streben 5 verläuft. Die in dieser Querschnittsansicht beispielhaft dargestellte flächenförmig ausgebildete Strebe 5 umfasst eine in Richtung einer Längsachse LA langgestreckte Form mit einer im Wesentlichen rechteckförmigen Hauptfläche 5a. Bezüglich der Längsachse LA ist die Strebe 5 symmetrisch ausgebildet. Hierbei erstreckt sich die Hauptfläche 5a entlang der Längsachse LA der Strebe 5 und jedenfalls in einem mittleren Bereich über mindestens die Hälfte einer Breite B des Kranträgers 2 quer zu der Längsrichtung LR des Kranträgers 2. Die Breite B entspricht hierbei dem Abstand der in Längsrichtung LR gesehen äußersten Punkte des Untergurts 4 oder - wie bei dem in Figur 3 gezeigten Kranträger 2 - des Obergurts 3, insbesondere der von der Längsachse LA nach außen weg gerichteten Flansche 3c, 4c.

Die Streben 5 werden vorzugsweise durch Laserschneiden aus einem Stahlblech hergestellt, das die Hauptfläche 5a und die gegebenenfalls vorgesehenen Nebenflächen 5b bildet. Im Bereich der sich gegenüberliegenden Strebenenden 5e, 5f sind an beiden Längsseiten der Strebe 5 zwei obere und zwei untere Ausnehmungen 5c vorgesehen. Die Ausnehmungen 5c sind rund, vorzugsweise kreisbogenförmig, ausgebildet und bewirken im Hinblick auf das Befestigen der Streben 5 an dem Obergurt 3 beziehungsweise dem Untergurt 4 des Kranträgers 2, dass der Kraftfluss durch die Streben 5 optimiert und die Schraubverbindung 12 beziehungsweise die Steckverbindung 13 entlastet werden. Durch die Ausnehmungen 5c entsteht im Bereich jedes Strebenendes 5e, 5f eine Einschnürung der Hauptfläche 5a quer zur Längsachse LA, wodurch die Strebe 5 in diesen Bereichen jeweils eine Art Membrangelenk ausbildet.

Zwischen den unteren und oberen Ausnehmungen 5c schließt sich an jeder Längsseite der Strebe 5 eine abgekantete, vorzugsweise rechtwinklig abgekantete und parallel zur Längsachse LA verlaufende, Nebenfläche 5b an die Hauptfläche 5a an. Die Nebenflächen 5b sind im Wesentlichen trapezförmig ausgebildet (siehe auch Figur 4). Sofern die Nebenflächen 5b wie in den vorliegenden Figuren dargestellt beide rechtwinklig in dieselbe Richtung abgekantet sind, weist die in Figur 2 abgebildete Strebe 5 zumindest im Bereich der Nebenflächen 5b einen in Richtung der Längsachse LA der Strebe 5 gesehen U-förmigen Querschnitt auf. Denkbar ist ebenfalls, dass die Nebenflächen 5b in gegensätzliche Richtungen abgekantet werden, so dass sich in Richtung der Längsachse LA gesehen zumindest teilweise ein Z-förmiger Querschnitt ergeben würde. Durch Weglassen einer Nebenfläche 5b beziehungsweise durch Vorsehen lediglich einer einzigen Nebenfläche 5b kann die Strebe 5 in entsprechender Weise auch einen zumindest teilweise L-förmigen Querschnitt in Richtung der Längsachse LA gesehen aufweisen. Über die Nebenflächen 5b wird die Beulsteifigkeit der Streben 5 erhöht. Die Nebenflächen 5b befinden sich außerhalb der Stege 3a, 4a zwischen dem Obergurt 3 und dem Untergurt 4, so dass nur nicht umgekantete Bereiche der Längsseiten der Hauptflächen 5a an den Stegen 3a, 4a, insbesondere an dessen einander zugewandten Innenseiten, anliegen. Die von den Ausnehmungen 5c ausgebildeten Membrangelenke sind somit in Richtung der Längsachse LA gesehen zwischen den Nebenflächen 5b und dem jeweiligen Strebenende 5e beziehungsweise 5f angeordnet, das zwischen den Stegen 3a beziehungsweise 4a eingespannt ist.

Die zur Befestigung der Strebe 5 jeweils an dem Obergurt 3 und dem Untergurt 4 vorgesehenen Schraubverbindungen 12 und Steckverbindungen 13 sind jeweils in gleicher Weise ausgebildet, wofür auch die Strebenenden 5e, 5f- abgesehen von unterschiedlichen Maßen - strukturell gleichartig aufgebaut sind. Die nachfolgenden Ausführungen hierzu beziehen sich daher entweder auf die Befestigung der Strebe 5 an dem Obergurt 3 oder auf die Befestigung der Strebe 5 an dem Untergurt 4 und sind dementsprechend auf die jeweils andere Befestigung der Strebe 5 übertragbar. Um die Strebe 5 mit dem oberen ersten Strebenende 5e zwischen den beiden Stegen 3a an dem Obergurts 3 mittels der Schraubverbindung 12 befestigen zu können, sind zwischen dem oberen ersten Strebenende 5e der Strebe 5 und den oberen Ausnehmungen 5c in dem Blech der Hauptfläche 5a zwei obere Aussparungen 5d vorgesehen, die rechts und links bezüglich der Längsachse LA angeordnet sind. Die Aussparungen 5d sind als im Wesentlichen rechteckförmige Schlitze ausgebildet, die sich ausgehend von den parallel zur Längsachse LA verlaufenden Längsseiten der Strebe 5 quer hierzu in Richtung der Längsachse LA erstrecken und die Längsseiten somit in Richtung der Längsachse LA zurückversetzen.

Im Bereich jeder Aussparung 5d ist eine Hülse 12b angeordnet, durch die eine Schraube 12a der Schraubverbindung 12 hindurch geführt ist. Die Hülse 12b ist hierbei mit ihrer Hülsenlängsachse parallel zur Längserstreckung der Aussparung 5d ausgerichtet und liegt mit ihrer Mantelfläche an einem Rand der Aussparung 5d an. Hierfür weist die Mantelfläche der Hülse 12b einen Durchmesser auf, der kleiner ist als die in Richtung der Längsachse LA gemessene Breite der Aussparung 5d. Somit ist die Hülse 12b zumindest teilweise in der Aussparung 5d angeordnet und ragt in die von der Hauptfläche 5a gebildete Ebene hinein oder durch diese hindurch. Damit die Hülse 12b gegen ein Verdrehen um die Hülsenlängsachse gesichert ist, ist die Hülse 12b an der Hauptfläche 5a, insbesondere an dem Rand der Aussparung 5d, befestigt. Vorzugsweise erfolgt die Befestigung stoffschlüssig und insbesondere durch eine Schweißverbindung zwischen der Mantelfläche der Hülse 12b und der Hauptfläche 5a im Bereich des Randes der Aussparung 5d. Alternativ sind auch Löt- oder Klebeverbindungen denkbar.

Durch die beschriebene Anordnung der Hülse 12b in der Aussparung ergibt sich für die Schraube 12a eine quer zur Längsachse LA der Strebe 5 und parallel zu deren Hauptfläche 5a verlaufende Einschraubrichtung ER.

Um die Strebe 5 an dem Obergurt 3 festzuklemmen, wird die Schraube 12a von außen durch einen am Obergurt 3 beziehungsweise dessen Steg 3a vorgesehenen Schraubendurchgang 3g sowie durch die Hülse 12b hindurch geführt und in der Einschraubrichtung ER mit einer vorzugsweise als Setzmutter ausgebildeten Mutter 12c verschraubt. Hierbei stützen sich die Schrauben 12a mit ihren Schraubenköpfen über die Stege 3a an dem Obergurt 3 ab. Innerhalb der Aussparung 5d stützt sich die Mutter 12c an der Hülse 12b ab, um das Anzugsdrehmoment für die Schraube 12a aufzunehmen. Hierdurch wird die Hülse 12b und damit auch die Strebe 5 an dem Obergurt 3 festgeklemmt. Zur Aufnahme von Quer- beziehungsweise Scherkräften zwischen der Strebe 5 beziehungsweise der daran befestigten Hülse 12c und dem Steg 3a des Obergurts 3 umfasst die Schraubverbindung 12 einen hülsenförmigen Spannstift 12d (siehe Figur 3a), durch den die Schraube 12a hindurch geführt ist.

In der Figur 3 ist die untere Schraubverbindung 12 als Detail A gekennzeichnet. In der Figur 3a ist eine vergrößerte Querschnittsansicht des Details A abgebildet, um daran beispielhaft und im Detail den prinzipiellen Aufbau sämtlicher Schraubverbindungen 12 darzustellen. Der abgebildete Querschnitt verläuft parallel zur Hauptfläche 5a der Strebe 5. Die Figur 3a zeigt insbesondere die Befestigung des unteren zweiten Strebenendes 5f an einem der beiden Stege 4a des Untergurts 4 über die untere Schraubverbindung 12. Abgebildet ist eine der Aussparungen 5d, an deren Rand die Hülse 12c mit ihrer Mantelfläche anliegt und angeschweißt ist. Außerdem ist die Anordnung des Spannstiftes 12d innerhalb des Schraubendurchgangs 4g und innerhalb der Hülse 12b dargestellt. Hierbei stützen sich die Hülse 12b und der Steg 4a über seinen Schraubendurchgang 4g an dem Spannstift 12d ab. Durch den sich entlang der Einschraubrichtung ER erstreckenden Spannstift 12d ist die Schraube 12a hindurch geführt.

Die Figur 3 zeigt außerdem, dass das obere erste Strebenende 5e zusätzlich zu der Schraubverbindung 12 über die Steckverbindung 13 an dem Obergurt 3 befestigt ist. Die Steckverbindung 13 wird unmittelbar zwischen der Strebe 5, insbesondere deren Hauptfläche 5, und dem Obergurt 3, insbesondere dessen Stegen 3a, hergestellt. Hierfür bildet die Hauptfläche 5a an ihren Längsseiten jeweils einen entsprechend seitlich angeordneten Steckabsatz 5g aus (siehe auch Figur 2), der sich, vorzugsweise rechteckförmig, von der Längsachse LA weg gerichtet nach außen erstreckt. Durch die flügelartige Anordnung der Steckabsätze 5g zwischen den oberen Ausnehmungen 5c und den oberen Aussparungen 5d ist die Hauptfläche 5a in diesem Bereich etwa T-förmig ausgebildet. Um die Steckverbindung 13 herstellen zu können, sind in dem Obergurt 3 beziehungsweise dessen Stegen 3a jeweils eine Steckaufnahme 3f vorgesehen, in die die Strebe 5 mit den Steckabsätzen 5g eingesteckt wird. Dementsprechend sind die Steckaufnahmen 3f schlitzförmig und komplementär zu den Steckabsätzen 5g beziehungsweise deren Blechquerschnitten ausgebildet. Die schlitzförmigen Steckaufnahmen 3f sind in den Stegen 3f jeweils als längliche Durchgangsöffnung ausgebildet, können aber auch nicht durchgehend und sacklochartig ausgebildet sein. Außerdem sind die Steckaufnahmen 3f entsprechend des Anstellwinkels α gegenüber der Hilfsebene ausgerichtet (siehe auch Figur 4), so dass sich die Steckaufnahmen 3f jeweils parallel zur Hauptfläche 5a und bevorzugt in einer Ebene mit der Hauptfläche 5a erstrecken. Durch die Ausrichtung der Steckaufnahmen 3f hinsichtlich des Anstellwinkels α und deren Beabstandung voneinander in Längsrichtung LR erfolgt eine diesbezügliche Festlegung der Befestigungsposition der Streben 5 in rotatorischer und in translatorischer Hinsicht. Um die Strebe 5 lösbar an dem Obergurt 3 zu befestigen, werden das obere erste Strebenende 5e der Strebe 5 und die Obergurtprofile 3d, 3e jeweils entlang einer Steckrichtung SR derart aufeinander zubewegt, dass die Steckabsätze 5g in die zugehörige Steckaufnahme 3f des entsprechenden Obergurtprofils 3d, 3e eingesteckt werden. Hierbei liegen die sich in Längsrichtung LA erstreckenden Längsseiten der Hauptfläche 5a sowohl oberhalb als auch unterhalb der Aussparungen 5d beziehungsweise der Steckabsätze 5g an den Innenseiten der Stege 3a an. Die auf diese Weise erzeugte Steckverbindung 13 bewirkt eine quer zu der Steckrichtung SR wirkende formschlüssige Verbindung beziehungsweise Befestigung der Strebe 5 an dem Obergurt 3, durch die die Position der Strebe 5 entsprechend der Position und Ausrichtung der Steckaufnahme 3f in der Befestigungsposition festgelegt ist. Der Formschluss kann dementsprechend nur durch eine Bewegung der Strebe 5 beziehungsweise der Obergurtprofile 3d, 3e in der jeweils entgegengesetzten Steckrichtung SR wieder gelöst werden. Im vorliegenden Ausführungsbeispiel ist die Steckrichtung SR mit der Einschraubrichtung ER identisch, so dass beide parallel zu der Ebene der Hauptfläche 5a liegen und hierbei die Schraubverbindungen 12 und die Steckverbindungen 13 zumindest teilweise innerhalb der Ebene der Hauptfläche 5a liegen (siehe auch Figur 4).

Zur Befestigung der Streben 5 an dem Untergurt 4 sind an dem unteren zweiten Strebenende 5f ebenfalls eine entsprechende untere Schraubverbindung 12 und eine untere Steckverbindung 13 vorgesehen. Bezogen auf die Längserstreckung der Strebe 5 sind die obere Schraubverbindung 12 und die untere Steckverbindung 13 den entsprechenden Strebenenden 5e, 5f zugewandt und die untere Schraubverbindung 12 und die obere Steckverbindung 13 dazwischen angeordnet. In Richtung der Längsachse LA können die Schraubverbindung 12 und die Steckverbindung 13 an dem jeweiligen Strebenende 5e, 5f jedoch beliebig in Bezug zu einander angeordnet sein.

Die Befestigung der Strebe 5 an dem Obergurt 3 erfolgt insbesondere über die Hauptfläche 5a, da die Schraubverbindung 12 beziehungsweise die Steckverbindung 13 jeweils die Hauptfläche 5a in Form der Aussparungen 5d beziehungsweise der Steckabsätze 5g einbeziehen und somit unmittelbar mit der Hauptfläche 5a zusammenwirken.

Nachfolgend wird ein Verfahren zur Montage des zuvor beschriebenen Kranträgers 2, insbesondere zur lösbaren Befestigung der den Obergurt 3 mit dem Untergurt 4 verbindenden flächenförmigen Streben 5, beschrieben. Hierbei werden in einem ersten Montageschritt die Streben 5 bezüglich des Obergurts 3 und des Untergurts 4 in eine den gewünschten Anstellwinkel α der Streben 5 sowie deren Beabstandung in Längsrichtung LR aufweisende Befestigungsposition gebracht. Um die Befestigungsposition zu erreichen, werden in dem ersten Montageschritt die Streben 5 mit ihren Steckaufsätzen 5g und die im Anstellwinkel α ausgebildeten Steckaufnahmen 3f, 4f des Obergurts 3 und des Untergurts 4 in der Steckrichtung SR zusammengesteckt. Dementsprechend dienen die Steckaufnahmen 3f, 4f als Positionierhilfe beim Herstellen der jeweiligen Steckverbindungen 13, durch die die Befestigungsposition aufgrund des oben beschriebenen Formschlusses in translatorischer Hinsicht in Längsrichtung LR sowie hinsichtlich des Anstellwinkels α festgelegt wird. Sofern der Obergurt 3 beziehungsweise der Untergurt 4 jeweils aus zwei Obergurtprofilen 3d, 3e beziehungsweise aus zwei Untergurtprofilen 4e, 4f zusammen gesetzt wird, werden diese entsprechend mit den Streben 5 zusammengesteckt.

In einem zweiten Montageschritt wird dann der Kranträger 2 über zwei Schraubverbindungen 12 in der in dem ersten Montageschritt hergestellten Befestigungsposition auch hinsichtlich der Einsteckrichtung ER arretiert und festgelegt. Hierbei klemmen zwei Schrauben 12a der oberen Schraubverbindung 12 das obere erste Strebenende 5e an dem Obergurt 3, insbesondere zwischen dessen beiden Stegen 3a, und zwei Schrauben 12a der unteren Schraubverbindung 12 das untere zweite Strebenende 5f an dem Untergurt 4, insbesondere zwischen dessen beiden Stegen 4a, fest. Die oberen und unteren Steckverbindungen 13 legen nicht nur als Positionierhilfe die Befestigungsposition fest, sondern entlasten hierbei auch die verdrehsicher ausgebildeten Schraubverbindungen 12. Aufgrund der verdrehsicheren Schraubverbindungen 12 ist es jedoch grundsätzlich auch denkbar, bei der Montage des Kranträgers 2 auf die Steckverbindung 13 zu verzichten und den Anstellwinkel α allein über die Schraubverbindung 12 einzustellen und aufrechtzuerhalten.

In der Figur 4 ist eine ausschnittsweise Seitenansicht des Kranträgers 2 gemäß der Figur 2 gezeigt. Dargestellt sind der Obergurt 3 und der Untergurt 4 des Kranträgers, die über die flächenförmigen Streben 5 lösbar miteinander verbunden sind. Insbesondere sind hierbei zwei Paare der mit dem Anstellwinkel α gegenüber der Hilfslinie HL satteldachartig angeordneten Streben 5 abgebildet. Die Streben 5 jedes Paares sind an dem Obergurt 3 unter Ausbildung von zwei nebeneinander angeordneten oberen Knotenbereichen OK über jeweils eine Schraubverbindung 12 und eine Steckverbindung 13 befestigt. Erkennbar sind die Schraubenköpfe der durch den jeweiligen Schraubendurchgang 3g geführten und sich an dem Steg 3a des Obergurts 3 abstützenden Schrauben 12a der Schraubverbindungen 12. Ebenso dargestellt sind die von der sich quer zu der Längsrichtung LR des Kranträgers 2 erstreckenden Hauptfläche 5a ausgebildeten Steckabsätze 5g. Die Steckabsätze 5g sind hierbei durch die in dem dargestellten Steg 3a des Obergurts 3 vorgesehene Steckaufnahme 3f hindurch gesteckt.

Des Weiteren sind die Streben 5 jedes Paares an dem Untergurt 4 unter Ausbildung der unteren Knotenbereiche UK ebenfalls über jeweils eine an den Schraubendurchgängen 4g angeordnete Schraubverbindung 12 und eine Steckverbindung 13 befestigt, von denen in Figur 4 ebenfalls die Schraubverbindungen 12 und die Steckverbindungen 13 dargestellt sind.

In der Figur 4 ist außerdem die trapezförmige Ausbildung der von den Hauptflächen 5a abgekanteten Nebenflächen 5b der Streben 5 gut erkennbar. Die Nebenflächen 5b sind außerhalb der Stege 3a, 4a der Ober- und Untergurte 3, 4 angeordnet und erstrecken sich in beziehungsweise parallel zu einer vertikalen, die Längsrichtung LR der Kranträgers 2 beinhaltenden Ebene. In oder zumindest parallel zu einer von der Hauptfläche 5a definierten Ebene, die quer zu der Längsrichtung LR und gegenüber der vertikalen Hilfslinie HL mit dem Anstellwinkel α geneigt ist, liegen die von der Hauptfläche 5a ausgebildeten Steckabsätze 5g, Ausnehmungen 5c und Aussparungen 5d, die Schrauben 12a der Schraubverbindungen 12, insbesondere deren Einschraubrichtung ER, und die Steckrichtung SR der Steckverbindungen 13 sowie die schlitzförmigen Steckaufnahmen 3f, 4g und die Mittelpunkte der Schraubendurchgänge 3g, 4g des Obergurts 3 beziehungsweise des Untergurts 4.

Die Gesamtlänge einer Strebe 5 beträgt in einer möglichen Ausführungsform 890 mm. Hierbei sind dann die Steckabsätze 5g jeweils mit einer in Richtung der Längsachse LA gemessenen Steckbreite von 25 mm in die Steckaufnahmen 3f, 4f der Ober- und Untergurte 3, 4 eingesteckt. Der maximale Abstand zwischen den Mitten der die Schraubverbindungen 12 aufnehmenden Aussparungen 5d und den Steckabsätzen 5g beträgt dann jeweils 35 mm. Die Nebenflächen 5b weisen bezogen auf die Längsachse LA eine Nebenflächenlänge von 530 mm auf, das heißt die Nebenflächen 5b erstrecken sich in ihrer Längsrichtung über die Nebenflächenlänge von 530 mm.

Die Nebenflächenlängen liegen somit vorzugsweise in einem Bereich von etwa 40% bis 70%, besonders bevorzugt 60% bis 65%, der Gesamtlänge der Strebe 5. Ausgehend vom jeweils dem Strebenende 5e beziehungsweise 5f zugewandten Ende der Ausnehmung 5c liegt die Länge des Strebenendes 5e, 5f in einem Bereich von etwa 10% bis 15% der Gesamtlänge der Strebe 5. In Bezug auf die Gesamtlänge der Strebe 5 beträgt die Länge der Membrangelenke im Bereich der Ausnehmungen 5c vorzugsweise 5% bis 10%, besonders bevorzugt 8%.

Die lösbare Verbindung der Streben 5 mit dem Obergurt 3 und dem Untergurt 4 mittels der beschriebenen Schraubverbindung 12 und der Steckverbindung 13 ist unabhängig davon möglich, ob der Obergurt 3 beziehungsweise der Untergurt 4 aus Obergurtprofilen 3d, 3e beziehungsweise Untergurtprofilen 4d, 4e zusammengesetzt oder als einteiliges Flachprofil 3b beziehungsweise Flachprofil 4b ausgebildet ist. Außerdem kann die Schraubverbindung 12 an dem entsprechenden Strebenende 5e, 5f auch lediglich eine Schraube 12a und die Steckverbindung 13 lediglich einen Steckabsatz 5g umfassen.

In den Figuren 1 bis 4 sind alle Streben 5 flächenförmig ausgebildet und wie beschrieben an dem Obergurt 3 und dem Untergurt 4 b lösbar befestigt. Es ist jedoch auch möglich, dass nicht alle Streben 5 lösbar befestigt sind, sondern einige der Streben 5 unlösbar, insbesondere durch Verschweißen, an dem Obergurt 3 oder dem Untergurt 4 befestigt werden. Darüber hinaus ist es denkbar, dass nicht alle Streben 5, sondern nur einige der Streben 5 flächenförmig ausgebildet sind. Gleiches gilt für gegebenenfalls vorgesehene Pfosten 6, die jedoch bevorzugt in gleicher Weise wie die Streben 5 mit ihrem oberen ersten Pfostenende 6e zwischen den Stegen 3a des Obergurtes 3 angeordnet und mit diesen zusammengesteckt und verschraubt sind. Hierfür weisen auch die Pfosten 6 an den Längsseiten ihrer Hauptflächen 6a entsprechende Aussparungen 6d sowie Steckabsätze 6g auf.

Es ist grundsätzlich ebenfalls denkbar, dass zur lösbaren Befestigung der Streben 5 an dem Obergurt 3 beziehungsweise dem Untergurt 4 Bolzenverbindungen, die jeweils einen Bolzen und mindestens einen Sicherungsring umfasst, verwendet werden. Die Bolzenverbindungen können zusätzlich oder anstelle der Schraubverbindung 12 oder der Steckverbindung 13 vorgesehen werden und hierbei in entsprechender Weise mit den Streben 5, insbesondere über entsprechende Aussparungen 5d, dem Obergurt 3 oder dem Untergurt 4 verbunden werden.

### Bezugszeichenliste

- 1: Kran
- 2: Kranträger
- 3: Obergurt
- 3a: Steg
- 3b: Flachprofil
- 3c: Flansch
- 3d: erstes Obergurtprofil
- 3e: zweites Obergurtprofil
- 3f: Steckaufnahme
- 3g: Schraubendurchgang
- 4: Untergurt
- 4a: Steg
- 4b: Flachprofil
- 4c: Flansch
- 4d: erstes Untergurtprofil
- 4e: zweites Untergurtprofil
- 4f: Steckaufnahme
- 4g: Schraubendurchgang
- 4h: Lauffläche
- 5: Strebe
- 5a: Hauptfläche
- 5b: Nebenfläche
- 5c: Ausnehmung
- 5d: Aussparung
- 5e: erstes Strebenende
- 5f: zweites Strebenende
- 5g: Steckabsatz
- 6: Pfosten
- 6a: Hauptfläche
- 6c: Ausnehmung
- 6d: Aussparung
- 6e: erstes Pfostenende
- 6f: zweites Pfostenende
- 7: erstes Fahrwerk
- 7a: erster Elektromotor
- 8: zweites Fahrwerk
- 8a: zweiter Elektromotor
- 9: Krankatze
- 10: Kransteuerung
- 11: Hängesteuerschalter
- 12: Schraubverbindung
- 12a: Schraube
- 12b: Hülse
- 12c: Mutter
- 12d: Spannstift
- 13: Steckverbindung

- α: Anstellwinkel
- A: Detail
- B: Breite
- ER: Einschraubrichtung
- F: Fahrtrichtung
- HL: Hilfsebene
- L: Länge
- LA: Längsachse
- LR: Längsrichtung
- OK: oberer Knotenbereich
- SR: Steckrichtung
- UK: unterer Knotenbereich

## Patentansprüche

1. Kranträger (2) für einen Kran (1), insbesondere für einen Brücken- oder Portalkran, der als Fachwerkträger mit einem Obergurt (3), einem Untergurt (4) und diese miteinander verbindenden Streben (5) ausgebildet ist, wobei mindestens eine der Streben (5) flächenförmig ausgebildet ist und eine sich quer zu einer Längsrichtung (LR) des Kranträgers (2) erstreckende Hauptfläche (5a) aufweist, **dadurch gekennzeichnet, dass** die Strebe (5) an dem Obergurt (3) und/oder dem Untergurt (4) lösbar befestigt ist.

2. Kranträger (2) nach Anspruch 1, **dadurch gekennzeichnet, dass** die Strebe (5) über die Hauptfläche (5a) an dem Obergurt (3) und/oder dem Untergurt (4) befestigt ist.

3. Kranträger (2) nach Anspruch 1 oder 2, **dadurch gekennzeichnet, dass** die Strebe (5) an einem Steg (3a, 4a) des Obergurts (3) und/oder des Untergurts (4) befestigt ist und der Steg (3a, 4a) sich vorzugsweise vertikal in Bezug auf die Längsrichtung (LR) des Kranträgers (2) erstreckt.

4. Kranträger (2) nach einem der Ansprüche 1 bis 3, **dadurch gekennzeichnet, dass** die Strebe (5) formschlüssig und/oder kraftschlüssig befestigt ist.

5. Kranträger (2) nach einem der Ansprüche 1 bis 4, **dadurch gekennzeichnet, dass** die Strebe (5) mittels einer Schraubverbindung (12) befestigt ist.

6. Kranträger (2) nach Anspruch 5, **dadurch gekennzeichnet, dass** die Schraubverbindung (12) zumindest teilweise innerhalb einer von der Hauptfläche (5a) gebildeten Ebene angeordnet ist und vorzugsweise eine zur Hauptfläche (5a) parallele Einschraubrichtung (ER) aufweist.

7. Kranträger (2) nach Anspruch 5 oder 6, **dadurch gekennzeichnet, dass** die Schraubverbindung (12) mindestens eine Schraube (12a), eine an der Hauptfläche (5a) befestigte Hülse (12b) sowie eine Mutter (12c) umfasst und mittels der Schraube (12a), die durch einen Schraubendurchgang (3g, 4g) des Obergurts (3) oder des Untergurts (4) sowie die Hülse (12b) geführt ist, und der Mutter (12c), die sich an der Hülse (12b) abstützt und vorzugsweise als Setzmutter ausgebildet ist, die Strebe (5) an dem Obergurt (3) oder dem Untergurt (4) befestigt ist.

8. Kranträger (2) nach Anspruch 7, **dadurch gekennzeichnet, dass** die Schraubverbindung (12) zusätzlich einen Spannstift (12d) umfasst, durch den die Schraube (12a) hindurch geführt ist und an dem sich der Obergurt (3) oder der Untergurt (4) abstützt.

9. Kranträger (2) nach Anspruch 7 oder 8, **dadurch gekennzeichnet, dass** die Hauptfläche (5a) mindestens eine Aussparung (5d) aufweist, an deren Rand die Hülse (12b) mit ihrer Mantelfläche anliegt und befestigt, vorzugsweise angeschweißt, angelötet oder angeklebt, ist.

10. Kranträger (2) nach einem der Ansprüche 1 bis 9, **dadurch gekennzeichnet, dass** die Strebe (5) mittels einer Steckverbindung (13) befestigt ist.

11. Kranträger (2) nach Anspruch 10, **dadurch gekennzeichnet, dass** die Steckverbindung (13) eine zur Hauptfläche (5a) parallele Steckrichtung (SR) aufweist.

12. Kranträger (2) nach Anspruch 10 oder 11, **dadurch gekennzeichnet, dass** die Steckverbindung (13) unmittelbar zwischen der Hauptfläche (5a) und dem Obergurt (3) oder dem Untergurt (4) hergestellt ist, insbesondere durch mindestens einen Steckabsatz (5g) der Hauptfläche (5a), der in eine Steckaufnahme (3f) des Obergurts (3) oder in eine Steckaufnahme (4f) des Untergurts (4) gesteckt ist.

13. Kranträger (2) nach einem der Ansprüche 1 bis 12, **dadurch gekennzeichnet, dass** der Obergurt (3) und der Untergurt (4) zusätzlich über mehrere entlang der Längsrichtung (LR) des Kranträgers (2) angeordnete Pfosten (6) miteinander verbunden sind.

14. Kranträger (2) nach einem der Ansprüche 1 bis 13, **dadurch gekennzeichnet, dass** der Obergurt (3) und der Untergurt (4) ausschließlich lösbar miteinander verbunden sind.

15. Kran (1), insbesondere Brückenkran oder Portalkran, mit mindestens einem sich horizontal in einer Längsrichtung (LR) erstreckenden Kranträger (2), **dadurch gekennzeichnet, dass** der Kranträger (2) nach einem der Ansprüche 1 bis 14 ausgebildet ist.

## Claims

1. Crane girder (2) for a crane (1), in particular for an overhead or gantry crane, said crane girder being designed as a trussed girder with an upper chord (3), a lower chord (4) and braces (5) connecting said chords to one another, wherein at least one of the braces (5) is designed in a laminar manner and has a main surface (5a) which extends transversely to a longitudinal direction (LR) of the crane girder (2), **characterised in that** the brace (5) is detachably fastened to the upper chord (3) and/or the lower chord (4).

2. Crane girder (2) as claimed in claim 1, **characterised in that** the brace (5) is fastened to the upper chord (3) and/or the lower chord (4) via the main surface (5a).

3. Crane girder (2) as claimed in claim 1 or 2, **characterised in that** the brace (5) is fastened to a web (3a, 4a) of the upper chord (3) and/or of the lower chord (4) and the web (3a, 4a) extends preferably vertically in relation to the longitudinal direction (LR) of the crane girder (2).

4. Crane girder (2) as claimed in any one of claims 1 to 3, **characterised in that** the brace (5) is fastened in a form-fitting and/or force-fitting manner.

5. Crane girder (2) as claimed in any one of claims 1 to 4, **characterised in that** the brace (5) is fastened by means of a screw connection (12).

6. Crane girder (2) as claimed in claim 5, **characterised in that** the screw connection (12) is arranged at least partially within a plane formed by the main surface (5a) and preferably has a screw-in direction (ER) in parallel with the main surface (5a).

7. Crane girder (2) as claimed in claim 5 or 6, **characterised in that** the screw connection (12) comprises at least one screw (12a), a sleeve (12b) fastened to the main surface (5a) and a nut (12c) and, by means of the screw (12a) which is guided through a screw passage (3g, 4g) of the upper chord (3) or of the lower chord (4) and the sleeve (12b), and the nut (12c) which is supported on the sleeve (12b) and is designed preferably as a press nut, the brace (5) is fastened to the upper chord (3) and the lower chord (4).

8. Crane girder (2) as claimed in claim 7, **characterised in that** the screw connection (12) additionally comprises a clamping pin (12d), through which the screw (12a) is guided and on which the upper chord (3) or the lower chord (4) is supported.

9. Crane girder (2) as claimed in claim 7 or 8, **characterised in that** the main surface (5a) has at least one aperture (5d), against the edge of which the peripheral surface of the sleeve (12b) lies and is fastened, preferably welded, soldered or adhered.

10. Crane girder (2) as claimed in any one of claims 1 to 9, **characterised in that** the brace (5) is fastened by means of a plug-in connection (13).

11. Crane girder (2) as claimed in claim 10, **characterised in that** the plug-in connection (13) has a plug-in direction (SR) in parallel with the main surface (5a).

12. Crane girder (2) as claimed in claim 10 or 11, **characterised in that** the plug-in connection (13) is produced directly between the main surface (5a) and the upper chord (3) or the lower chord (4), in particular by means of at least one plug-in shoulder (5g) of the main surface (5a) which is inserted into a plug-in receiver (3f) of the upper chord (3) or into a plug-in receiver (4f) of the lower chord (4).

13. Crane girder (2) as claimed in any one of claims 1 to 12, **characterised in that** the upper chord (3) and the lower chord (4) are additionally connected to one another by means of a plurality of posts (6) arranged in the longitudinal direction (LR) of the crane girder (2).

14. Crane girder (2) as claimed in any one of claims 1 to 13, **characterised in that** the upper chord (3) and the lower chord (4) are connected to one another exclusively in a detachable manner.

15. Crane (1), in particular an overhead crane or gantry crane, comprising at least one crane girder (2) which extends horizontally in a longitudinal direction (LR), **characterised in that** the crane girder (2) is designed as claimed in any one of claims 1 to 14.

## Revendications

1. Poutre de grue (2) destinée à une grue (1), notamment un pont ou un portique, qui est conçu comme une poutre en treillis pourvue d'une membrure supérieure (3), d'une membrure inférieure (4) et d'entretoises (5) reliant celles-ci entre elles, au moins une des entretoises (5) étant conçue sous une forme plane et une surface principale (5a) s'étendant transversalement à une direction longitudinale (LR) de la poutre de grue (2), **caractérisée en ce que** l'entretoise (5) est fixée de façon amovible à la membrure supérieure (3) et/ou la membrure inférieure (4).

2. Poutre de grue (2) selon la revendication 1, **caractérisée en ce que** l'entretoise (5) sur la surface principale (5a) est fixée à la membrure supérieure (3) et/ou la membrure inférieure (4).

3. Poutre de grue (2) selon la revendication 1 ou 2, **caractérisée en ce que** l'entretoise (5) est fixée à une aile (3a, 4a) de la membrure supérieure (3) et/ou de la membrure inférieure (4) et l'aile (3a, 4a) s'étend de préférence verticalement par rapport à la direction longitudinale (LR) de la poutre de grue (2).

4. Poutre de grue (2) selon l'une des revendications 1 à 3, **caractérisée en ce que** l'entretoise (5) est fixée par complémentarité de formes et/ou en force.

5. Poutre de grue (2) selon l'une des revendications 1 à 4, **caractérisée en ce que** l'entretoise (5) est fixée au moyen d'une liaison à vis (12).

6. Poutre de grue (2) selon la revendication 5, **caractérisée en ce que** la liaison à vis (12) est disposée au moins partiellement à l'intérieur d'un plan formé par la surface principale (5a) et présente de préférence une direction de vissage (ER) parallèle à la surface principale (5a).

7. Poutre de grue (2) selon la revendication 5 ou 6, **caractérisée en ce que** la liaison à vis (12) comporte au moins une vis (12a), une douille (12b) fixée à la surface principale (5a) et un écrou (12c), et l'entretoise (5) est fixée à la membrure supérieure (3) ou la membrure inférieure (4) au moyen de la vis (12a) qui est guidée à travers un passage de vis (3g, 4g) de la membrure supérieure (3) ou de la membrure inférieure (4) et la douille (12b), et de l'écrou (12c) qui s'appuie sur la douille (12b) et qui est conçu de préférence sous la forme d'un écrou de blocage.

8. Poutre de grue (2) selon la revendication 7, **caractérisée en ce que** la liaison à vis (12) comprend en outre une goupille de serrage (12d) qui est traversée par la vis (12a) et sur laquelle la membrure supérieure (3) ou la membrure inférieure (4) s'appuie.

9. Poutre de grue (2) selon la revendication 7 ou 8, **caractérisée en ce que** la surface principale (5a) comporte au moins un évidement (5d) sur le bord duquel la douille (12b) est en appui au niveau de sa surface d'enveloppe et est fixée, de préférence soudée, brasée ou collée.

10. Poutre de grue (2) selon l'une des revendications 1 à 9, **caractérisée en ce que** l'entretoise (5) est fixée au moyen d'une liaison par enfichage (13).

11. Poutre de grue (2) selon la revendication 10, **caractérisée en ce que** la liaison par enfichage (13) présente une direction d'enfichage (SR) parallèle à la surface principale (5a).

12. Poutre de grue (2) selon la revendication 10 ou 11, **caractérisée en ce que** la liaison par enfichage (13) est réalisée directement entre la surface principale (5a) et la membrure supérieure (3) ou la membrure inférieure (4), en particulier par le biais d'au moins une saillie d'enfichage (5g) de la surface principale (5a) qui est enfichée dans un logement d'enfichage (3f) de la membrure supérieure (3) ou dans un logement d'enfichage (4f) de la membrure inférieure (4).

13. Poutre de grue (2) selon l'une des revendications 1 à 12, **caractérisée en ce que** la membrure supérieure (3) et la membrure inférieure (4) sont reliées entre elles également par une pluralité de montants (6) disposés le long de la direction longitudinale (LR) de la poutre de grue (2).

14. Poutre de grue (2) selon l'une des revendications 1 à 13, **caractérisée en ce que** la membrure supérieure (3) et la membrure inférieure (4) ne sont reliées entre elles que de manière amovible.

15. Grue (1), en particulier pont de grue ou portique, munie d'au moins une poutre de grue (2) s'étendant horizontalement dans une direction longitudinale (LR), **caractérisée en ce que** la poutre de grue (2) est conçue selon l'une des revendications 1 à 14.
